# EUROPEAN PATENT SPECIFICATION

(11) **EP 4 447 190 B1**
(45) Date of publication and mention of the grant of the patent: **22.04.2026**
(21) Application number: 23747391.3
(22) Date of filing: 27.01.2023
(51) Int. Cl.: G01N 21/95, G01N 21/88, H01M 50/211, H01M 50/507, H01M 50/514, H01M 50/557

(54) **BATTERY MODULE INSPECTION METHOD**
VERFAHREN ZUR INSPEKTION EINES BATTERIEMODULS
PROCÉDÉ D'INSPECTION DE MODULE DE BATTERIE

(30) Priority: 27.01.2022 KR 20220012733; 26.01.2023 KR 20230010161
(43) Date of publication of application: 16.10.2024
(73) Proprietor: LG Energy Solution, Ltd., Seoul 07335 (KR)
(72) Inventor: JEON, Si Won, Daejeon 34122 (KR); KO, Yeong Kyun, Daejeon 34122 (KR); OH, Jong Kyun, Daejeon 34122 (KR); JEONG, Woo Seung, Daejeon 34122 (KR); LEE, Cheol, Daejeon 34122 (KR); JUNG, Young Ho, Daejeon 34122 (KR); LEE, Seung Min, Daejeon 34122 (KR)
(74) Representative: Plasseraud IP
(86) International application number: PCT/KR2023/001288
(87) International publication number: WO 2023/146350

(56) References cited:
- DE-B3- 102012 020 358
- JP-A- 2005 339 925
- JP-A- 2015 170 402
- JP-A- 2018 006 217
- KR-A- 20180 086 041
- KR-A- 20210 125 135
- KR-A- 20210 125 136
- KR-B1- 102 081 671

## Description

### TECHNICAL FIELD

### CROSS-REFERENCE TO RELATED APPLICATION

The present application claims the benefit of the priority of Korean Patent Application Nos. 10-2022-0012733, filed on January 27, 2022, and 10-2023-0010161, filed on January 26, 2023.

### TECHNICAL FIELD

The present invention relates to a battery module inspection method.

### BACKGROUND ART

Secondary batteries are rechargeable unlike primary batteries and capable of being reduced in size and increasing capacity and thus, much research and development for the secondary batteries are carried out recently. As the technical development of and a demand for mobile devices increase, a demand for the secondary batteries as energy sources rapidly increases.

According to shapes of a battery case, the secondary batteries are classified into coin type batteries, cylindrical type batteries, prismatic type batteries, and pouch type batteries. In the secondary batteries, an electrode assembly mounted in a battery case is a chargeable and dischargeable power generating device having a structure in which an electrode and a separator are stacked.

The secondary batteries attract a lot of interest as energy sources not only for mobile devices, such as mobile phones, digital cameras, and notebook computers, but also for power systems of electric bikes, electric vehicles, hybrid electric vehicles, and the like.

A small-sized battery pack in which one battery cell is packed is used in small-sized devices such as mobile devices or cameras, but a medium to large-sized battery pack in which a battery pack having two or more battery cells connected to each other in parallel and/or in series is packed is used in medium to large-sized devices such as notebook computers or electric vehicles. Thus, the number of the battery cells included in the battery pack may be variously set according to an output voltage or charge/discharge capacity required.

Meanwhile, when a plurality of battery cells are connected to each other in parallel/series so as to configure the battery pack, it is a general method that a battery module constituted by at least one battery pack is configured and then, such at least one battery module is used to configure the battery pack by addition of other components. The number of the battery module included in the battery pack or the number of the battery cell included in the battery module may be variously set according to an output voltage or charge/discharge capacity required. The battery module set thus is configured by including a plurality of battery cells, which are stacked, and a busbar frame that electrically connects electrode leads of the plurality of battery cells to each other.

According to the related art, inspections before and after assembling of an ICB busbar frame assembly (Busbar Frame Assy) are carried out through visual inspection work by a worker. Accordingly, erroneous inspections occur due to human inspection errors caused by the inspections relying on the worker. In addition, manual inspections of the ICB busbar frame assembly (Busbar Frame Assy) are carried out and thus, labor costs are increased.

Document JP 2018/006217 relates to a method of inspecting a bonding state between an electrode tab and a bus bar of the related art.

Document JP 2005/339925 relates to an inspection method of a unit cell suitable for manufacturing a battery pack and an assembly method of a battery pack with high yield.

Document DE 10 2012 020358 relates to a device for mounting a holding frame with busbars accommodated therein on a battery module consisting of several cells with separate poles, wherein the busbars connect adjacent poles of the cells to one another in the mounting position.

### DISCLOSURE OF THE INVENTION

### TECHNICAL PROBLEM

One aspect of the present invention is to provide a battery module inspection method capable of preventing an erroneous inspection from occurring when a cell stack in which multiple battery cells are stacked is inspected during manufacturing of a battery module.

### TECHNICAL SOLUTION

A battery module inspection method according to an embodiment of the present invention is defined in the appended claims.

### ADVANTAGEOUS EFFECTS

According to the present invention, the occurrence of the erroneous inspections may be prevented by automatically performing the vision inspection through the vision camera when the cell stack in which the multiple battery cells are stacked is inspected during the manufacturing of the battery module.

### BRIEF DESCRIPTION OF THE DRAWINGS

FIG. 1 is a perspective view illustrating a battery module inspected in a battery module inspection method according to an embodiment of the present invention.
FIG. 2 is an exploded perspective view illustrating a battery module inspected in a battery module inspection method according to an embodiment of the present invention.
FIG. 3 is a front view illustrating a first vision inspection process in a battery module inspection method according to an embodiment of the present invention.
FIG. 4 is a schematic perspective view illustrating a first vision inspection process in a battery module inspection method according to an embodiment of the present invention.
FIG. 5 is a plan view illustrating a state in which an electrode lead is photographed by a vision camera in a first vision inspection process of a battery module inspection method according to an embodiment of the present invention.
FIG. 6 is a front view illustrating a second vision inspection process in a battery module inspection method according to an embodiment of the present invention.
FIG. 7 is a schematic perspective view exemplarily illustrating a concept of a second vision inspection process in a battery module inspection method according to an embodiment of the present invention.
FIG. 8 is a side view illustrating a state in which an electrode lead is photographed by a vision camera in a second vision inspection process of a battery module inspection method according to an embodiment of the present invention.
FIG. 9 is a front view illustrating a third vision inspection process in a battery module inspection method according to an embodiment of the present invention.
FIG. 10 is a schematic perspective view exemplarily illustrating a concept of a third vision inspection process in a battery module inspection method according to an embodiment of the present invention.

### MODE FOR CARRYING OUT THE INVENTION

The purpose, specified advantages, and novel features of the present invention will be clarified through the following detailed description and preferred embodiments taken in conjunction with the accompanying drawings. Note that like elements are designated by like reference numerals as far as possible even if they are shown in different drawings. The present invention may be embodied in different forms and should not be construed as limited to the embodiments set forth herein. Moreover, detailed descriptions related to well-known art will be ruled out in order not to unnecessarily obscure subject matters of the present invention.

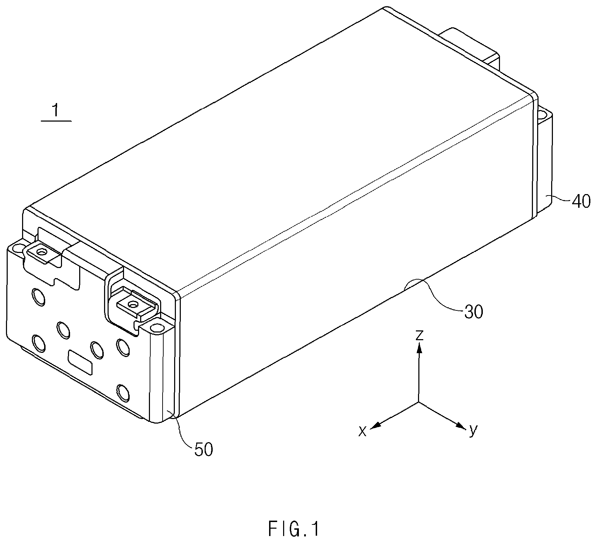

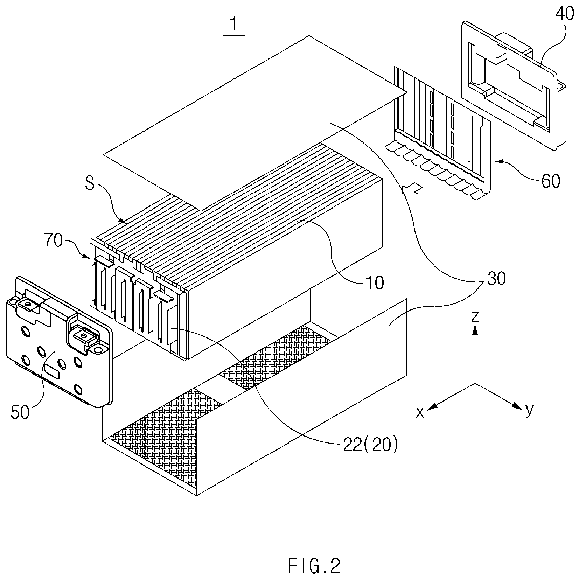

FIG. 1 is a perspective view illustrating a battery module inspected in a battery module inspection method according to an embodiment of the present invention. FIG. 2 is an exploded perspective view illustrating a battery module inspected in a battery module inspection method according to an embodiment of the present invention.

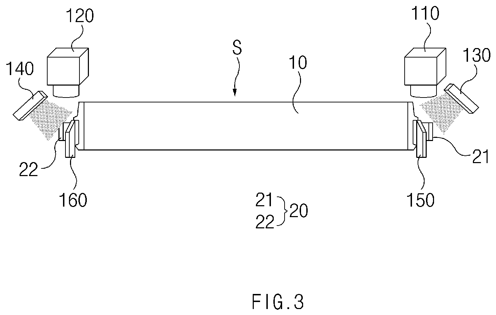

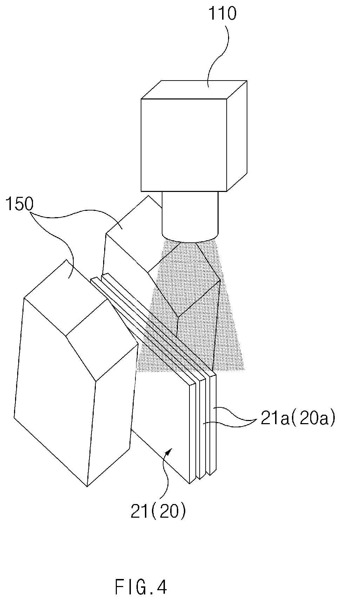

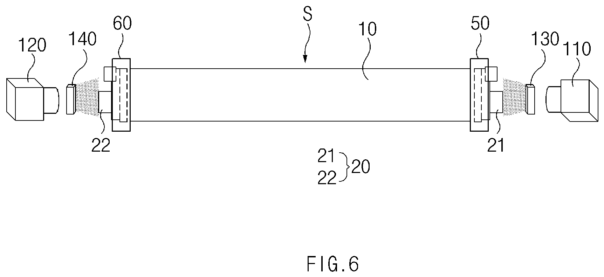

In addition, FIG. 3 is a front view illustrating a first vision inspection process in a battery module inspection method according to an embodiment of the present invention. FIG. 4 is a schematic perspective view illustrating a first vision inspection process in a battery module inspection method according to an embodiment of the present invention. FIG. 6 is a front view illustrating a second vision inspection process in a battery module inspection method according to an embodiment of the present invention.

Referring to FIGS. 1 to 6, the battery module inspection method according to an embodiment of the present invention may include a first vision inspection process of inspecting the number and positions of electrode leads 20 provided in multiple battery cells 10, respectively, through vision cameras 110 and 120, and a second vision inspection process of inspecting the number and bending states of the electrode leads 20 provided in the multiple battery cells 10, respectively, through the vision cameras 110 and 120. In addition, the battery module inspection method according to an embodiment of the present invention may further include a third vision inspection process of photographing lower portions of the electrode leads 20 through the vision cameras 110 and 120 to inspect the number and positions of the electrode leads 20.

In more detail, referring to FIGS. 1 and 2, a battery module 1 inspected in the battery module inspection method according to an embodiment of the present invention may include a cell stack S, in which the multiple battery cells 10 are stacked, busbar frames 60 and 70, each of which electrically connects the electrode leads 20 of the multiple battery cells 10 to each other, and a module case 30 that accommodates the cell stack S and the busbar frames 60 and 70 therein. In addition, the battery module may further include end plates 40 and 50 that cover openings at both sides, respectively, of the module case 30.

In the cell stack S, a stack in which the multiple battery cells 10, each of which includes an electrolyte, are stacked may be provided.

Each of the battery cells 10 may include an electrode assembly, the electrolyte, and a pouch that accommodates the electrode assembly and the electrolyte therein.

The electrode assembly is a power generating device that is chargeable and dischargeable, and an electrode and a separator may be alternately stacked therein. Here, the electrode may include a positive electrode and a negative electrode, and the positive electrode, the separator, and the negative electrode may be alternately stacked. Here, the separator separates and electrically insulates the positive electrode and the negative electrode from each other.

The battery cell 10 may further include the electrode lead 20 having one side portion connected to the electrode of the electrode assembly and the other side portion extending to the outside of the pouch.

The electrode lead 20 may include a positive electrode lead 21 connected to the positive electrode and a negative electrode lead 22 connected to the negative electrode.

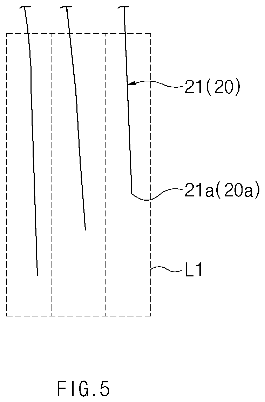

FIG. 5 is a plan view illustrating a state in which an electrode lead is photographed by a vision camera in a first vision inspection process of a battery module inspection method according to an embodiment of the present invention.

Referring to FIGS. 2 and 3 to 5, in the first vision inspection process, the cell stack S in which the multiple battery cells 10 are stacked may be inspected, and the number and positions of the electrode leads 20 provided in the multiple battery cells 10, respectively, may be inspected through the vision cameras 110 and 120.

The first vision inspection process may be performed before the cell stack S is assembled with the busbar frames 60 and 70.

Upper portions of the electrode leads 20 inserted into insulation blocks 150 and 160 may be photographed through the vision cameras 110 and 120 to inspect the number and positions of the electrode leads 20 in the first vision inspection process.

In addition, an end 20a of the electrode lead 20 in each of multiple virtual rectangular shapes L1, the number of which is the same as the number of the multiple electrode leads 20, may be detected to check the number and position thereof in the first vision inspection process. Here, when even one electrode lead 20 is not detected in each of the multiple virtual rectangular shapes L1, it may be determined to be defective, and when two or more electrode leads 20 are detected in each of the multiple virtual rectangular shapes L1, it may be determined as redundant insertion to be defective. Here, for a specific example, an upper portion of the positive electrode lead 21 may be photographed by each of the vision cameras, and when one end 21a of the positive electrode lead 21 is disposed in each of the multiple virtual rectangular shapes L1, it may be determined to be normal. The defect determination of the negative electrode lead 22 may be also carried out like the defect determination of the positive electrode lead 21. In the first vision inspection process, the electrode leads 20 may be illuminated through illuminators 130 and 140 during the inspection of the electrode leads 20 through the vision cameras 110 and 120. Here, the illuminators 130 and 140 may be provided as bar illuminators 130 and 140.

In the first vision inspection process, the second vision inspection process, and the third vision inspection process, the electrode leads 20 may be illuminated through the illuminators 130 and 140 in an upper diagonal direction based on a direction in which the electrode leads 20 extend.

Accordingly, the number and position defects of the stacked battery cells of the cell stack S may be easily detected through the first vision inspection process before the cell stack S and the busbar frames 60 and 70 are assembled. Thus, it may be easily inspected through the first vision inspection process whether it is possible to assemble the cell stack S and the busbar frames 60 and 70, before the cell stack S and the busbar frames 60 and 70 are assembled.

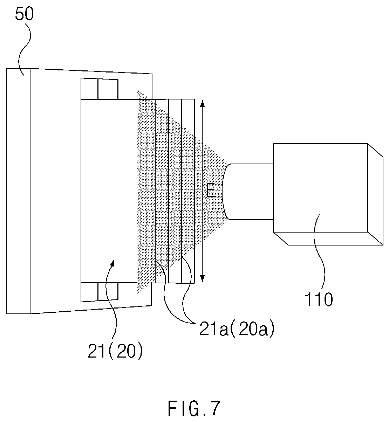

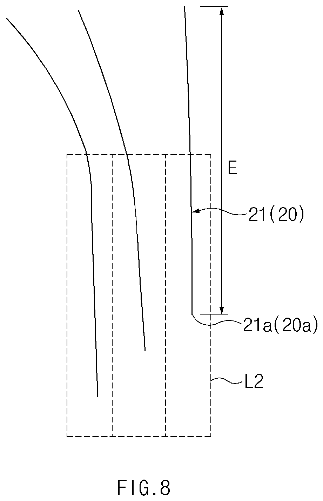

FIG. 7 is a schematic perspective view exemplarily illustrating a concept of a second vision inspection process in a battery module inspection method according to an embodiment of the present invention. FIG. 8 is a side view illustrating a state in which an electrode lead is photographed by a vision camera in a second vision inspection process of a battery module inspection method according to an embodiment of the present invention. FIG. 7 schematically simply illustrates a busbar frame.

Referring to FIGS. 2, 6 and 8, in the second vision inspection process, the number and bending states of the electrode leads 20 provided in the multiple battery cells 10, respectively, may be inspected through the vision cameras 110 and 120.

In addition, front surfaces of the electrode leads 20 may be photographed through the vision cameras 110 and 120 to inspect the number and bending states of the electrode leads 20 in the second vision inspection process. Here, the second vision inspection process may be performed after the cell stack S is assembled with the busbar frames 60 and 70. Accordingly, occurrences of the erroneous insertion and bending defects of the electrode lead 20 may be easily detected through the second vision inspection process when the cell stack S is assembled with the busbar frames 60 and 70. Assembly defects of the cell stack S and the busbar frames 60 and 70 may be also easily detected through the second vision inspection process.

Referring to FIGS. 7 and 8, in a method for inspecting the number of the electrode lead 20 in the second vision inspection process, the end 20a of the electrode lead 20 in each of multiple virtual rectangular shapes L2, the number of which is same as the number of the multiple electrode leads 20, may be detected to check the number. Here, when even one electrode lead 20 is not detected in each of the multiple virtual rectangular shapes L2, it may be determined to be defective, and when two or more electrode leads 20 are detected in each of the multiple virtual rectangular shapes L2, it may be determined as redundant insertion to be defective.

In a method for inspecting the bending state of the electrode lead 20 in the second vision inspection process, the end 20a of the electrode lead 20 may be detected to track a length thereof, and when an end length E of the detected electrode lead 20 is detected to be less 3.3% or more than an end length of a regular electrode lead, it may be determined as a bending defect. Here, for example, when a length of a bending portion is 2 mm or more in a specification of the electrode lead 20 of which a length is 30 mm, it may be determined to be defective.

In addition, referring to FIGS. 6 and 7, in the second vision inspection process, the electrode leads 20 may be illuminated through the illuminators 130 and 140 in a direction facing the direction in which the electrode leads 20 extend. Here, an axial direction in which the electrode lead 20 extends and a light axis of each of the illuminators 130 and 140 may be a coaxial direction in the second vision inspection process.

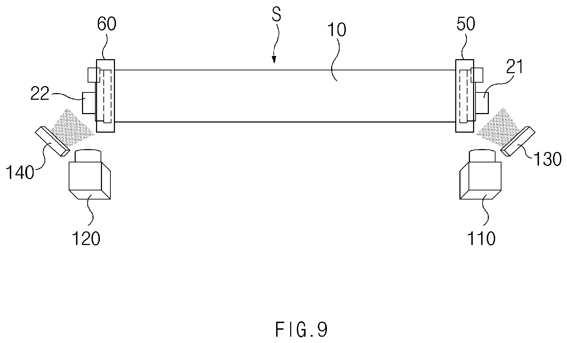

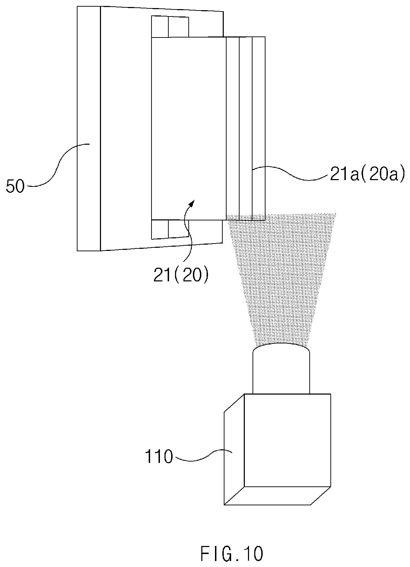

FIG. 9 is a front view illustrating a third vision inspection process in a battery module inspection method according to an embodiment of the present invention. FIG. 10 is a schematic perspective view exemplarily illustrating a concept of a third vision inspection process in a battery module inspection method according to an embodiment of the present invention. FIG. 10 schematically simply illustrates a busbar frame.

Referring to FIGS. 2, 9 and 10, in the third vision inspection process, the number and positions of the electrode leads 20 provided in the multiple battery cells 10, respectively, may be inspected through the vision cameras 110 and 120 after the cell stack S is assembled with the busbar frames 60 and 70.

The lower portions of the electrode leads 20 may be photographed through the vision cameras 110 and 120 to inspect the number and positions of the electrode leads 20 in the third vision inspection process.

In the third vision inspection process, the electrode leads 20 may be illuminated through the illuminators 130 and 140 in a lower diagonal direction based on the direction in which the electrode leads 20 extend.

Thus, it may be easily inspected through the third vision inspection process whether the electrode lead 20 is erroneously inserted into each of the busbar frames 60 and 70 or there is no defect of an insertion length, after the cell stack S is assembled with the busbar frames 60 and 70. Accordingly, an assembled state of the cell stack S and the busbar frames 60 and 70 may be easily detected through the third vision inspection process.

In addition, an end of the electrode lead 20 in each of multiple virtual rectangular shapes, the number of which is the same as the number of the multiple electrode leads 20, may be detected to check the number and position thereof in the third vision inspection process like the defect discrimination method of the first vision inspection process. Here, when even one electrode lead 20 is not detected in each of the multiple virtual rectangular shapes, it may be determined to be defective, and when two or more electrode leads 20 are detected in each of the multiple virtual rectangular shapes, it may be determined as redundant insertion to be defective.

Meanwhile, each of the vision cameras 110 and 120 and the illuminators 130 and 140 used in the first vision inspection process, the second vision inspection process, and the third vision inspection process may be moved to a fixed position by a moving means.

Through the moving means, each of the vision cameras 110 and 120 and the illuminators 130 and 140 may move upward from the electrode lead 20 of the battery cell 10 in the first vision inspection process, move coaxially together with the electrode lead 20 based on the electrode lead 20 of the battery cell 10 in the second vision inspection process, and move downward from the electrode lead 20 of the battery cell 10 in the third vision inspection process.

Here, the moving means may include a frame, in which each of the vision cameras 110 and 120 and the illuminators 130 and 140 is mounted, and a rotating part that rotates the frame. Here, the rotating part may include a servo motor that rotates a rotary shaft of the rotating part.

The battery module inspection method according to an embodiment of the present invention configured as above may prevent the occurrence of the erroneous inspections by automatically performing the vision inspection through the vision cameras 110 and 120 when the cell stack S in which the multiple battery cells 10 are stacked is inspected during the manufacturing of the battery module 1.

Although the present invention has been described in detail with reference to the limited embodiments and the accompanying drawings, the present invention is not limited thereto. The present invention may be variously implemented by those of ordinary skill in the art, to which the present invention pertains, within the scope of the appended claims

### [Description of the Symbols]

1: Battery module
10: Battery cell
20: Electrode lead
20a: End 21: Positive electrode lead
21a: End 22: Negative electrode lead
30: Module case
40, 50: End plate
60, 70: Busbar frame
110, 120: Vision camera
130, 140: Illuminator
150, 160: Insulation block
S: Cell stack
E: End length

## Claims

1. A battery module inspection method comprising:
a first vision inspection process of inspecting a cell stack (S) in which multiple battery cells (10) are stacked, wherein the number and positions of electrode leads (20) provided in the multiple battery cells (10), respectively, are inspected through a vision camera (110, 120); and
a second vision inspection process of inspecting the number and bending states of the electrode leads (20) provided in the multiple battery cells (10), respectively, through the vision camera (110, 120) after the first vision inspection process;
wherein the first vision inspection process is performed before the cell stack (S) is assembled with a busbar frame (60, 70), and
the second vision inspection process is performed after the cell stack (S) is assembled with the busbar frame (60, 70).

2. The battery module inspection method of claim 1, wherein, in the first vision inspection process, upper portions of the electrode leads (20) inserted into an insulation block (150, 160) are photographed through the vision camera (110, 120) so as to inspect the number and positions of the electrode leads (20).

3. The battery module inspection method of claim 1, wherein, in the second vision inspection process, front surfaces of the electrode leads (20) are photographed through the vision camera (110, 120)so as to inspect the number and bending states of the electrode leads (20).

4. The battery module inspection method of claim 1, further comprising a third vision inspection process of inspecting the number and positions of the electrode leads (20) provided in the multiple battery cells (10), respectively, through the vision camera (110, 120) after the cell stack (S) is assembled with the busbar frame (60, 70).

5. The battery module inspection method of claim 4, wherein, in the third vision inspection process, lower portions of the electrode leads (20) are photographed through the vision camera (110, 120) so as to inspect the number and positions of the electrode leads (20).

6. The battery module inspection method of claim 5, wherein, in the first vision inspection process, the second vision inspection process, and the third vision inspection process, when the electrode leads (20) are inspected through the vision camera (110, 120), the electrode leads (20) are illuminated through an illuminator (130, 140).

7. The battery module inspection method of claim 6, wherein, in the first vision inspection process, the electrode leads (20) are illuminated through the illuminator (130, 140) in an upper diagonal direction based on a direction in which the electrode leads (20) extend.

8. The battery module inspection method of claim 6, wherein, in the second vision inspection process, the electrode leads (20) are illuminated through the illuminator (130, 140) in a direction facing a direction in which the electrode leads (20) extend.

9. The battery module inspection method of claim 6, wherein, in the third vision inspection process, the electrode leads (20) are illuminated through the illuminator (130, 140) in a lower diagonal direction based on a direction in which the electrode leads (20) extend.

## Patentansprüche

1. Batteriemodul-Inspektionsverfahren, umfassend:
einen ersten Sicht-Inspektionsprozess eines Inspizierens eines Zellenstapels (S), in welchem mehrere Batteriezellen (10) gestapelt sind, wobei die Anzahl und Positionen von Elektrodenleitungen (20), welche jeweils in den mehreren Batteriezellen (10) bereitgestellt sind, durch eine Sichtkamera (110, 120) inspiziert werden; und
einen zweiten Sicht-Inspektionsprozess eines Inspizierens der Anzahl und Biegezustände der Elektrodenleitungen (20), welche jeweils in den mehreren Batteriezellen (10) bereitgestellt sind, durch die Sichtkamera (110, 120) nach dem ersten Sicht-Inspektionsprozess;
wobei der erste Sicht-Inspektionsprozess durchgeführt wird, bevor der Zellenstapel (S) mit einem Sammelschienen-Rahmen (60, 70) verbunden wird, und
der zweite Sicht-Inspektionsprozess durchgeführt wird, nachdem der Zellenstapel (S) mit dem Sammelschienen-Rahmen (60, 70) verbunden wird.

2. Batteriemodul-Inspektionsverfahren nach Anspruch 1, wobei in dem ersten Sicht-Inspektionsprozess obere Abschnitte der Elektrodenleitungen (20), welche durch einen Isolationsblock (150, 160) eingesetzt werden, durch die Sichtkamera (110, 120) fotografiert werden, um so die Anzahl und Positionen der Elektrodenleitungen (20) zu inspizieren.

3. Batteriemodul-Inspektionsverfahren nach Anspruch 1, wobei in dem zweiten Sicht-Inspektionsprozess vordere Flächen der Elektrodenleitungen (20) durch die Sichtkamera (110, 120) fotografiert werden, um so die Anzahl und Biegezustände der Elektrodenleitungen (20) zu inspizieren.

4. Batteriemodul-Inspektionsverfahren nach Anspruch 1, ferner umfassend einen dritten Sicht-Inspektionsprozess eines Inspizierens der Anzahl und Positionen der Elektrodenleitungen (20), welche jeweils in den mehreren Batteriezellen (10) bereitgestellt sind, durch die Sichtkamera (110, 120) nachdem der Zellenstapel (S) mit dem Sammelschienen-Rahmen (60, 70) verbunden wird.

5. Batteriemodul-Inspektionsverfahren nach Anspruch 4, wobei in dem dritten Sicht-Inspektionsprozess untere Abschnitte der Elektrodenleitungen (20) durch die Sichtkamera (110, 120) fotografiert werden, um so die Anzahl und Positionen der Elektrodenleitungen (20) zu inspizieren.

6. Batteriemodul-Inspektionsverfahren nach Anspruch 5, wobei in dem ersten Sicht-Inspektionsprozess, dem zweiten Sicht-Inspektionsprozess und dem dritten Sicht-Inspektionsprozess, wenn die Elektrodenleitungen (20) durch die Sichtkamera (110, 120) inspiziert werden, die Elektrodenleitungen (20) durch eine Beleuchtungseinheit (130, 140) beleuchtet werden.

7. Batteriemodul-Inspektionsverfahren nach Anspruch 6, wobei in dem ersten Sicht-Inspektionsprozess die Elektrodenleitungen (20) durch die Beleuchtungseinheit (130, 140) in einer oberen diagonalen Richtung auf Grundlage einer Richtung beleuchtet werden, in welcher sich die Elektrodenleitungen (20) erstrecken.

8. Batteriemodul-Inspektionsverfahren nach Anspruch 6, wobei in dem zweiten Sicht-Inspektionsprozess die Elektrodenleitungen (20) durch die Beleuchtungseinheit (130, 140) in einer Richtung beleuchtet werden, welche zu einer Richtung weist, in welcher sich die Elektrodenleitungen (20) erstrecken.

9. Batteriemodul-Inspektionsverfahren nach Anspruch 6, wobei in dem dritten Sicht-Inspektionsprozess die Elektrodenleitungen (20) durch die Beleuchtungseinheit (130, 140) in einer unteren diagonalen Richtung auf Grundlage einer Richtung beleuchtet werden, in welcher sich die Elektrodenleitungen (20) erstrecken.

## Revendications

1. Procédé d'inspection de module de batterie comprenant :
un premier procédé d'inspection par vision consistant à inspecter un empilement (S) d'éléments dans lequel de multiples éléments (10) de batterie sont empilés, dans lequel le nombre et les positions de fils (20) d'électrode fournis dans les multiples éléments (10) de batterie sont respectivement inspectés au moyen d'une caméra de vision (110, 120) ; et
un deuxième procédé d'inspection par vision consistant à inspecter le nombre et les états de flexion des fils (20) d'électrode fournis dans les multiples éléments (10) de batterie, respectivement, au moyen de la caméra de vision (110, 120) après le premier procédé d'inspection par vision ;
dans lequel le premier procédé d'inspection par vision est effectué avant que l'empilement (S) d'éléments soit assemblé avec un cadre (60, 70) de barres omnibus, et
le deuxième procédé d'inspection par vision est effectué après que l'empilement (S) d'éléments est assemblé avec le cadre (60, 70) de barres omnibus.

2. Procédé d'inspection de module de batterie selon la revendication 1, dans lequel, dans le premier procédé d'inspection par vision, les parties supérieures des fils (20) d'électrode insérées dans un bloc d'isolation (150, 160) sont photographiées au moyen de la caméra de vision (110, 120) de manière à inspecter le nombre et les positions des fils (20) d'électrode.

3. Procédé d'inspection de module de batterie selon la revendication 1, dans lequel, dans le deuxième procédé d'inspection par vision, les surfaces avant des fils (20) d'électrode sont photographiées au moyen de la caméra de vision (110, 120) de manière à inspecter le nombre et les états de flexion des fils (20) d'électrode.

4. Procédé d'inspection de module de batterie selon la revendication 1, comprenant en outre un troisième procédé d'inspection par vision consistant à inspecter le nombre et les positions des fils (20) d'électrode fournis dans les multiples éléments (10) de batterie, respectivement, au moyen de la caméra de vision (110, 120) après que l'empilement (S) d'éléments est assemblé avec le cadre (60, 70) de barres omnibus.

5. Procédé d'inspection de module de batterie selon la revendication 4, dans lequel, dans le troisième procédé d'inspection par vision, les parties inférieures des fils (20) d'électrode sont photographiées au moyen de la caméra de vision (110, 120) de manière à inspecter le nombre et les positions des fils (20) d'électrode.

6. Procédé d'inspection de module de batterie selon la revendication 5, dans lequel, dans le premier procédé d'inspection par vision, le deuxième procédé d'inspection par vision et le troisième procédé d'inspection par vision, lorsque les fils (20) d'électrode sont inspectés au moyen de la caméra de vision (110, 120), les fils (20) d'électrode sont éclairés au moyen d'un illuminateur (130, 140).

7. Procédé d'inspection de module de batterie selon la revendication 6, dans lequel, dans le premier procédé d'inspection par vision, les fils (20) d'électrode sont éclairés au moyen de l'illuminateur (130, 140) selon une direction diagonale supérieure sur la base d'une direction dans laquelle les fils (20) d'électrode s'étendent.

8. Procédé d'inspection de module de batterie selon la revendication 6, dans lequel, dans le deuxième procédé d'inspection par vision, les fils (20) d'électrode sont éclairés au moyen de l'illuminateur (130, 140) selon une direction opposée à une direction dans laquelle les fils (20) d'électrode s'étendent.

9. Procédé d'inspection de module de batterie selon la revendication 6, dans lequel, dans le troisième procédé d'inspection par vision, les fils (20) d'électrode sont éclairés au moyen de l'illuminateur (130, 140) selon une direction diagonale inférieure sur la base d'une direction dans laquelle les fils (20) d'électrode s'étendent.
